# EUROPEAN PATENT SPECIFICATION

(11) **EP 4 347 112 B1**
(45) Date of publication and mention of the grant of the patent: **18.02.2026**
(21) Application number: 22730814.5
(22) Date of filing: 25.05.2022
(51) Int. Cl.: B01J 19/24

(54) **ELECTRICAL HEATER WITH CATALYTIC ACTIVITY**
ELEKTRISCHER HEIZER MIT KATALYTISCHER AKTIVITÄT
RADIATEUR ÉLECTRIQUE À ACTIVITÉ CATALYTIQUE

(30) Priority: 28.05.2021 EP 21176587
(43) Date of publication of application: 10.04.2024
(73) Proprietor: Topsoe A/S, 2800 Kgs. Lyngby (DK)
(72) Inventor: ØSTBERG, Martin, 4030 Tune (DK)
(74) Representative: Topsoe A/S
(86) International application number: PCT/EP2022/064264
(87) International publication number: WO 2022/248581

(56) References cited:
- EP-A1- 0 913 357
- EP-A2- 1 790 910
- WO-A1-02/46676
- WO-A1-2013/135668

## Description

### TECHNICAL FIELD

The present invention relates to an electrical heater suitable for use in industrial chemical processes and plants. A process for manufacturing the electrical heater, and various uses of the heater are also provided.

### BACKGROUND

Process gases for various chemical processes should be free from contaminants which might negatively affect the processes or systems in which the process gases are used. In particular, certain contaminant gases may damage electrochemical or catalytic components of a reactor.

For instance, the presence of oxygen contaminant in a process gas for a solid oxide electrolyser cell (SOEC) can enter the stack and cause damage. In particular, oxygen may oxidize the (Ni-based) material in the SOEC cell, thereby losing effectivity (performance)
It is known that contaminant gases can be removed from a process gas by means of dedicated units; e.g. a partial oxidation (PROX) reactor or a bed of reduced metal catalyst (Ni or Cu) reactor - or combinations thereof - can be used to remove oxygen from a gas stream. However, such reactors are usually specific for a particular contaminant gas, and cannot easily be used for different contaminant gases or for large volumes of gas. Also, the introduction of additional units in a process gas stream can cause a significant pressure drop in the process gas stream.

WO97/02092 describes a ceramic-coated metal net, and its use in catalytically cleaning a gas stream. WO03/025490 discloses a device for performing catalytic reactions, which is in the form of a plate heat exchanger.

WO2013/135668 discloses an electrical heater for monolithic reactors comprising a metallic wire coated with catalytic active materials. This document does not disclose or suggest a structure of the heater - i.e. a monolith with channels, where the heating wire extends through the channels, as in the present invention. Advantages of the construction as claimed in the present invention are that the resistance wire suitably extends within multiple passages of the ceramic monolith, so as to increase the heating capabilities of the monolith.

It is therefore an object of the invention to provide systems and processes which can remove contaminant gases from process gases. In particular, it would be useful to provide such systems and processes while minimising equipment use, and without introducing a significant pressure drop in the process gas.

### SUMMARY

It has been found by the present inventors that a catalytic coating on an electrical heater can remove contaminant gases from a gas stream, and heat generated by the catalytic reaction can reduce, or completely remove, the need for external electrical power to the heater.

So, in a first aspect the present invention relates to an electrical heater as indicated in claim 1.

A process for manufacturing the electrical heater is also provided, as indicated in claim 9.

A process is provided for simultaneously heating a process gas and removing a contaminant gas from said process gas, said process comprising the steps of
- supplying process gas comprising said contaminant gas to an electrical heater as described herein,
- supplying electrical power to the resistance wire, thereby heating said resistance wire,
- selectively converting the contaminant gas in the process gas to a inert gas in a catalytic process promoted by the catalytic metal, while simultaneously heating the process gas.

The present technology also provides a solid oxide electrolyser system, a fuel cell system and a syngas system each comprising an electrical heater as described herein.

Additional aspects are set out in the dependent claims, the figures and the following description text.

### FIGURE LEGENDS

The technology is described with reference to the enclosed schematic figures, in which:
Fig. 1 shows a ceramic monolith, prior to winding metal resistance wire
Fig. 2 shows a cross-sectional view in a plane aligned along the length of an electrical heater, showing passages and metal resistance wire.
Fig. 3 shows an expanded, cross-sectional view of one passage of an electrical heater.
Fig. 4 shows the electrical heater included in a solid oxide electrolyser system

### DETAILED DISCLOSURE

Unless otherwise specified, any given percentages for gas content are % by volume.

The term "synthesis gas" is used interchangeably with the term "syngas" and is meant to denote a gas comprising hydrogen, carbon monoxide and also carbon dioxide and small amounts of other gasses, such as argon, nitrogen, methane, etc.

### Specific embodiments

As noted above, and as illustrated in the Figures, an electrical heater is provided, which is suitable for heating a gas stream. The electrical heater is mounted in a passage, and a gas stream flows around and/or through the electrical heater, thus raising the temperature of the gas stream downstream the electrical heater.

The electrical heater comprises a ceramic monolith. The ceramic monolith is suitably molded or extruded into the required form.

The ceramic monolith may be formed of one or more ceramic materials selected from steatite, cordierite, alumina, silica, or aluminates (e.g. XAl₂O₄ where X is Mg or Ca).

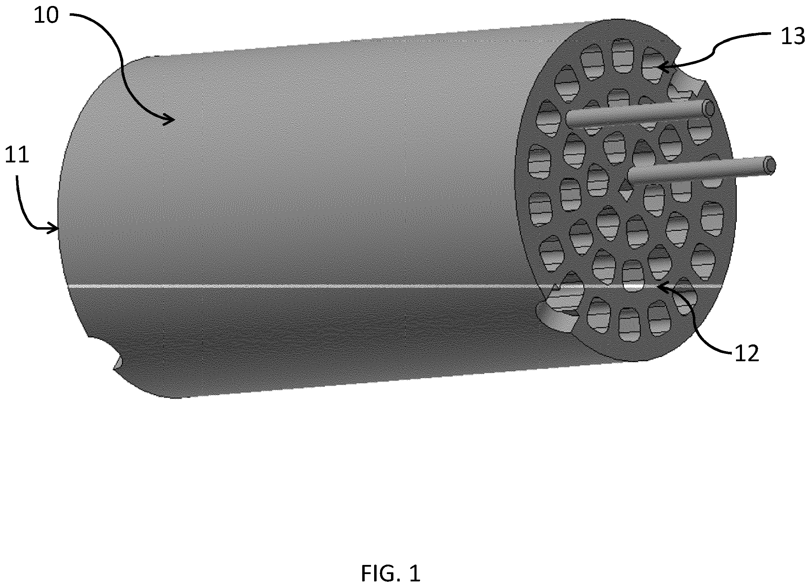

As illustrated in Figure 1, the ceramic monolith has opposing first and second ends, preferably with each end being substantially planar, and parallel with one another. A plurality of open passages extends from the first end of the monolith to the second end thereof, such that gas flow can take place through the monolith from the first end to the second end of the monolith. Suitably, all open passages in the ceramic monolith are arranged in parallel.

In the specific case illustrated, the ceramic monolith has a substantially cylindrical form. However, other forms, e.g. cuboid are possible.

### Resistance wire

A metal resistance wire is supported on the ceramic monolith. Typically, the metal resistance wire is wound around the monolith, and is also located within open passages of the monolith. Therefore, the resistance wire suitably extends within passages of the ceramic monolith from first to second end of the monolith).

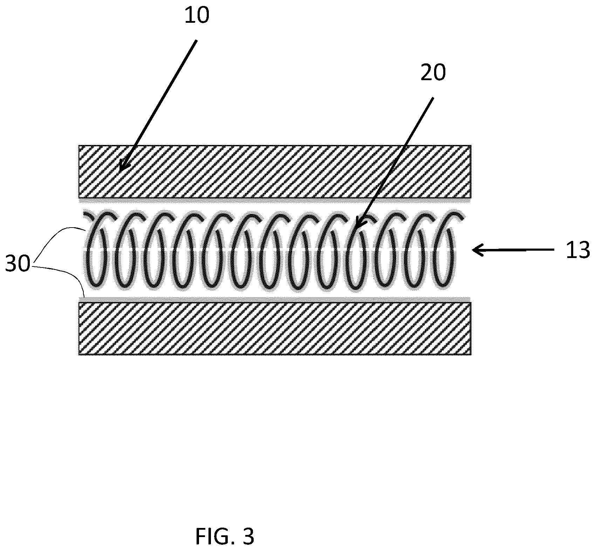

To provide good gas-to-surface contact area, the resistance wire can be arranged in spirals from first to second end of the monolith, as illustrated in Figure 3.

Suitably, the electrical heater comprises first and second electrical terminals, through which electrical current can be supplied to the heater. The resistance wire extends between the first and second electrical terminals, and is arranged to receive an electrical current applied between the first and the second electrical terminals and convert it into heat.

For ease of construction, the first and second electrical terminals may be arranged at the same end of the ceramic monolith.

The resistance wire suitably extends within multiple passages of the ceramic monolith, so as to increase the heating capabilities of the monolith. Preferably, at least a first portion of the resistance wire extends from the first end to the second end of the monolith within a first passage of the monolith, and at least a second portion of the resistance wire extends from the first end to the second end of the monolith within a second passage of the monolith. In other words, the resistance wire is threaded back and forth along open passages in the monolith. Most preferably, the resistance wire extends from the first electrical terminal, along alternating passages of the ceramic monolith to the second electrical terminal. Preferably, the resistance wire is threaded through every open passage in the monolith.

For optimal heating, the resistance wire must be stable in air when hot. The metal resistance wire suitably comprises one or more metals selected from the group consisting of iron, chromium, nickel or aluminium, preferably one or more metals selected from iron and aluminium. It is particularly of interest that the metal resistance wire is able to form aluminium oxide on the surface thereof, as this improves thermal contact with an overlying ceramic coating. Therefore, the metal resistance wire may comprise or consist of an aluminium (Al) alloy, such as an iron chromium aluminium (FeCrAl) alloy, suitably consisting of iron, chromium (20-30%) and aluminium (4-7.5 %).

Kanthal is the trademark for a family of iron-chromium-aluminium (FeCrAl) alloys used in a wide range of resistance and high-temperature applications. The alloys are known for their ability to withstand high temperatures and having intermediate electric resistance. As such, it kanthal alloys are frequently used in heating elements.

Kanthal FeCrAl alloy forms a protective coating of aluminium oxide (alumina). Aluminium oxide has high thermal conductivity but is an electrical insulator, so special techniques may be required to make good electrical connections.

Ordinary Kanthal FeCrAl alloy has a melting point of 1,425 °C Special grades can be used to provide melting points as high as 1,500 °C. Depending on specific composition the resistivity is about 1.4 µΩ·m and temperature coefficient is +49 ppm/K (+49×10⁻⁶ K⁻¹).

### Ceramic Coating and impregnation

At least a portion of the metal resistance wire, and optionally at least a portion of said ceramic monolith, is coated with a ceramic coating. Suitably, both the metal resistance wire and the ceramic monolith are coated with a ceramic coating, so as to provide a more uniform heat distribution.

Coating of the ceramic coating is suitably performed in one or more steps by slurry coating, or any other suitable known method for coating ceramic materials in a coating. The ceramic coating is porous, so that catalytic metal can be incorporated.

The ceramic coating may comprise or consist of a ceramic selected from the group consisting of alumina (Al₂O₃), an aluminate (XAl₂O₄ in which X is Mg, Ca, Ba, or mixtures thereof), silica, alumina-silicate (zeolite), zirconia-alumina and combinations thereof. Most preferred materials for the ceramic coating are zirconia-alumina, alumina, alumina titanate, zeolite, magnesium aluminate or combinations thereof-

At least a portion of - and preferably the entirety of - the ceramic coating is impregnated with a catalytic metal selected from the group consisting of Cu, Mn, Cr, Ni, Pt, Ir, Pd, Rh, Ru and combinations thereof. Preferably, the catalytic metal is selected from Pt, Ir, Pd, Rh or Ru In particular, selection of Pd as the catalytic metal has advantages, as it allows the content of the metal to be low (as low as 1 wt% considering coat + metal).

The addition of catalytic activity to the electrical heater in this manner provides low temperature activity to e.g. convert all oxygen in a gas stream to water. In particular, the catalytic metal is selected such that it can convert oxygen by reacting with hydrogen, forming water (2H₂ + O₂ => 2H₂O).

The present technology allows the formation of a ceramic coating that both will attach to the monolith surface as well as to the surface of the metal wire, and which then can be impregnated with the active metal for the catalysis.

In a particular embodiment, the ceramic monolith comprises steatite, the metal resistance wire is an iron chromium aluminium (FeCrAl) alloy, the ceramic coating is a zirconia / alumna coat and the catalytic metal is Pd.

Heat can be generated in the electrical heater by passing electricity along the metal resistance wire and/or through catalytic reactions which are promoted by the catalytic metal.

A process for manufacturing the electrical heater is also provided. The process comprises the steps of
- providing a ceramic monolith
- supporting a metal resistance wire on the ceramic monolith,
- coating at least a portion of said resistance wire, and optionally at least a portion of said ceramic monolith, with a ceramic coating,
- impregnating at least a portion of the ceramic coating with at least one aqueous solution containing a salt of a catalytic metal selected from the group consisting of Cu, Mn, Cr, Ni, Pt, Ir, Pd, Rh, Ru and combinations thereof,
- heating the electrical heater under reducing conditions so as to activate the catalytic metal.

Details of the process are as follows:
- The electrical heater (comprising resistance wire supported on monolith) is pretreated by heating it to about 1000°C in air, creating an oxide layer on the kanthal wire
- After pretreatment, the heater is then coated with a slurry coat made of zirconia and/or alumina one or more times to provide a (porous) ceramic coating on the resistance wire and on the monolith.
- The slurry-coated heater is then calcined at about 800°C to provide the ceramic coating.
- The ceramic coating of the heater is impregnated with an aqueous solution containing a noble metal (e.g. a nitrate salt, such as Pd(NO₃)₂ or similar)
- The heater is subsequently heated to dry and calcine, leaving the noble metal salt on the porous ceramic coating.
- Activation typically takes place *in situ* when the electrical heater is first heated under reducing conditions (i.e. under the process feed flow to the SOEC stack containing steam and hydrogen).

### System

The electrical heater described herein can be used in various systems, to provide heat as well as to simultaneously remove one or more contaminants from a gas stream.

The term "contaminant gas" is used to define a gaseous component in the process gas which has the potential to inhibit catalytic sites in the catalytic metal in question. For instance, sulfur, or sulfur-containing organic compounds.

In contrast thereto, the term "inert gas" refers to a gaseous component in the process gas which are not involved in the reactions in question, and which do not inhibit catalytic sites in the catalytic metal in question. This includes for instance gases such as argon or nitrogen.

One particularly interesting system is a solid oxide electrolyser system, comprising an electrolyser unit, preferably comprising one or more solid oxide electrolyser cells (SOEC). A supply of process gas is provided to the electrolyser unit. An electrical heater as described above is arranged to heat the process gas prior to it being fed to the electrolyser unit. Typically, such a system will comprise one electrical heater, and several SOEC cells, so the gas goes through the heater/catalyst and is then distributed to several cells all incorporated in the same stack.

The use of an electrical heater with catalytic activity simplifies the layout of the electrolyser unit, while combining the functions of heating and a catalytic removal of oxygen. This - in turn - allows minimization of equipment and maintains a low(er) pressure drop.

It is beneficial that oxygen is converted prior to the electrolyser unit. The catalyzed heater can both be used to convert oxygen in a fuel rich atmosphere or to convert hydrogen (fuel) in a fuel lean (oxidizing) atmosphere generated (additional) thermal energy. If the thermal energy is sufficient for the heat requirement the heater can be operated without providing electrical power (i.e. electrical current) to the heater.

Another system of interest is a fuel cell system, comprising a fuel cell and a supply of process gas to said fuel cell, wherein an electrical heater as described herein is arranged to heat the process gas prior to it being fed to the fuel cell. The process gas here is typically a mixture of methane, steam, hydrogen and possibly carbon monoxide, carbon dioxide and inerts (such as nitrogen).

A further system of interest is a syngas system, comprising a syngas unit and a supply of process gas to said syngas unit, wherein an electrical heater as described herein is arranged to heat the process gas prior to it being fed to the syngas unit. The process gas here is typically a mixture of methane, steam, hydrogen and possibly carbon monoxide, carbon dioxide and inerts (such as nitrogen).

Furthermore, a process for simultaneously heating a process gas and removing a contaminant gas from said process gas is provided. The process comprising the general steps of:
- supplying process gas comprising said contaminant gas to an electrical heater as described herein,
- supplying electrical power to the resistance wire, thereby heating said resistance wire,
- selectively converting the contaminant gas in the process gas to a inert gas in a catalytic process promoted by the catalytic metal, while simultaneously heating the process gas.

All particulars of the electrical heater described above are relevant - mutatis mutandis - to the various processes and systems described herein.

### Detailed description of the Figures

Fig. 1 shows a ceramic monolith 10, prior to winding metal resistance wire 20. In this embodiment, the monolith 10 has opposing first and second ends 11, 12. A plurality of open passages 13 extend from the first end 11 to the second end 12. In this way, gas flow can take place through the monolith from the first end to the second end of the monolith. Mounting pins (not labelled) extend from one end of the monolith, and enable mounting of the monolith within a reaction chamber.

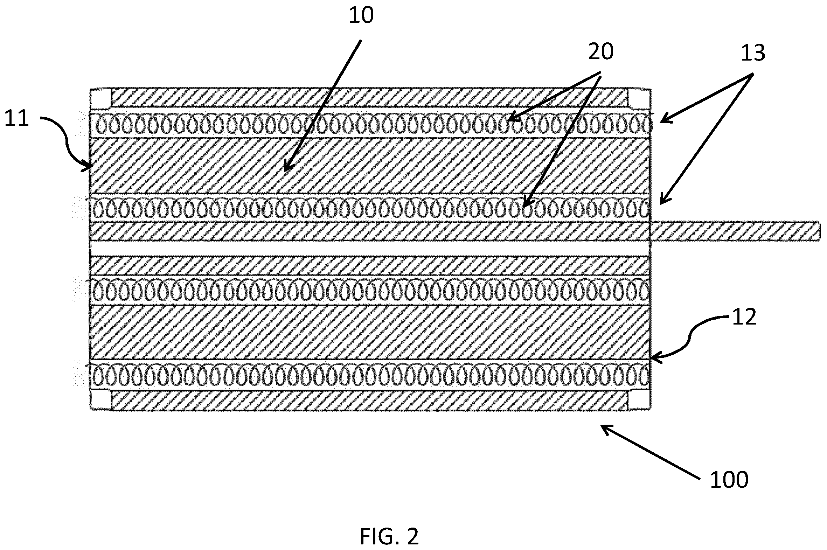

Fig. 2 shows a cross-sectional view in a plane aligned along the length of an electrical heater 100. Reference numbers are as per Figure 1. Additionally, Figure 2 shows a metal resistance wire 20 located within channels 13.
Fig. 3 shows an expanded, cross-sectional view of one passage 13 of a ceramic monolith. Metal resistance wire 20 is located within channels, and is coated with a ceramic coating 30. The ceramic coating is impregnated with a catalytic metal.

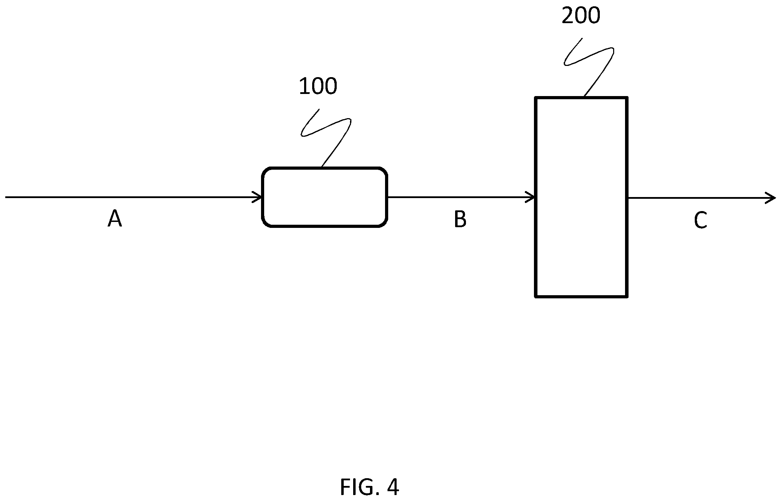

Fig. 4 shows the electrical heater 100 included in a solid oxide electrolyser system, together with a solid oxide electrolyser cell (SOEC) 200. In Figure 4, stream A will typically be a feed containing steam and hydrogen and possibly some low concentrations of oxygen and nitrogen. Stream B will be similar to stream A, in which oxygen has reacted with H₂ to form additional steam. Stream C will include hydrogen formed by the electrolysis cells, together with the remaining steam and nitrogen.

### Example 1:

A SOEC stack producing hydrogen by electrolysis of water uses electricity to generate the reaction, the water feed is evaporated and mixed with a small flow of hydrogen. The hydrogen has the ability to ensure the material of the electrolysis cell remains in a reduced state. A concern is that the content of oxygen dissolved in the water is a potential damaging agent for the material in the electrolysis cell. The mixed feed of steam and hydrogen is preheated in an electrical heater, however it is not certain that the oxygen present will react with hydrogen although there is a surplus of hydrogen in the flow. To ensure the reaction of oxygen with hydrogen to produce water upstream the electrolysis cell, the electrical heater is coated to contain a catalyst enabling the reaction between oxygen and hydrogen on the catalytic surface. This arrangement avoids a separate catalytic element that will introduce additional pressure drop to the system.

The present invention has been described with reference to a number of aspects and embodiments. These aspects and embodiments may be combined at will by the person skilled in the art while remaining within the scope of the patent claims.

## Claims

1. An electrical heater (100), said electrical heater (100) comprising a ceramic monolith (10) and a metal resistance wire (20) supported on said ceramic monolith (10), wherein at least a portion of said metal resistance wire (20), and optionally at least a portion of said ceramic monolith (10), is coated with a ceramic coating (30), and wherein at least a portion of said ceramic coating (30) is impregnated with a catalytic metal selected from the group consisting of Cu, Mn, Cr, Ni, Pt, Ir, Pd, Rh, Ru and combinations thereof,
wherein the ceramic monolith (10) has opposing first (11) and second (12) ends, wherein a plurality of open passages (13) extend from the first end (11) of the monolith to the second end (12) thereof, such that gas flow can take place through the monolith from the first end to the second end of the monolith
wherein the resistance wire (20) extends within multiple passages (13) of the ceramic monolith (10),
wherein at least a first portion of the resistance wire extends from the first end to the second end of the monolith within a first passage of the monolith (10), and wherein at least a second portion of the resistance wire (20) extends from the first end to the second end of the monolith within a second passage of the monolith.

2. The electrical heater (100) according to claim 1, wherein said metal resistance wire (20) comprises one or more metals selected from the group consisting of iron, chromium, nickel or aluminium, preferably one or more metals selected from iron and aluminium.

3. The electrical heater (100) according to any one of the preceding claims, wherein the metal resistance wire (20) comprises or consists of an aluminium (Al) alloy, such as an iron chromium aluminium (FeCrAl) alloy.

4. The electrical heater (100) according to any one of the preceding claims, wherein the ceramic coating (10) comprises or consists of a ceramic selected from the group consisting of alumina Al₂O₃, an aluminate XAl₂O₄ in which X is Mg, Ca, Ba, or mixtures thereof, silica, alumina-silicate zeolite, zirconia-alumina and combinations thereof.

5. The electrical heater (100) according to any one of the preceding claims, further comprising first and second electrical terminals, wherein the resistance wire (20) extends between the first and second electrical terminals, the resistance wire (20) being arranged to receive an electrical current applied between the first and the second electrical terminals and convert it into heat.

6. The electrical heater (100) according to any one of the preceding claims, wherein the ceramic monolith has a substantially cylindrical form.

7. The electrical heater (100) according to claim 1, wherein the resistance wire (20) extends from the first electrical terminal, along alternating passages of the ceramic monolith to the second electrical terminal.

8. The electrical heater (100) according to claim 1, wherein the first and second electrical terminals are arranged at the same end of the ceramic monolith.

9. A process for manufacturing the electrical heater (100) according to any one of the preceding claims, said process comprising the steps of
- providing a ceramic monolith (10),
wherein the ceramic monolith (10) has opposing first (11) and second (12) ends, wherein a plurality of open passages (13) extend from the first end (11) of the monolith to the second end (12) thereof, such that gas flow can take place through the monolith from the first end to the second end of the monolith
- supporting a metal resistance wire (20) on the ceramic monolith (10),
wherein the resistance wire (20) extends within multiple passages (13) of the ceramic monolith (10),
wherein at least a first portion of the resistance wire extends from the first end to the second end of the monolith within a first passage of the monolith (10), and wherein at least a second portion of the resistance wire (20) extends from the first end to the second end of the monolith within a second passage of the monolith,
- coating at least a portion of said resistance wire (20), and optionally at least a portion of said ceramic monolith (10), with a ceramic coating (30),
- impregnating at least a portion of the ceramic coating (30) with at least one aqueous solution containing a salt of a catalytic metal selected from the group consisting of Cu, Mn, Cr, Ni, Pt, Ir, Pd, Rh, Ru and combinations thereof,
- heating the electrical heater under reducing conditions so as to activate the catalytic metal.

10. A process for simultaneously heating a process gas and removing a contaminant gas from said process gas, said process comprising the steps of
- supplying process gas comprising said contaminant gas to an electrical heater (100) according to any one of claims 1-8,
- supplying electrical power to the resistance wire (20), thereby heating said resistance wire,
- selectively converting the contaminant gas in the process gas to a inert gas in a catalytic process promoted by the catalytic metal, while simultaneously heating the process gas.

11. A solid oxide electrolyser system, comprising an electrolyser unit, preferably a solid oxide electrolyser cell (SOEC, 200), and a supply of process gas (A) to said electrolyser unit, wherein an electrical heater (100) according to any one of claims 1-8 is arranged to heat the process gas prior to it being fed to the electrolyser unit.

12. A fuel cell system, comprising a fuel cell and a supply of process gas to said fuel cell, wherein an electrical heater (100) according to any one of claims 1-8 is arranged to heat the process gas prior to it being fed to the fuel cell.

13. A syngas system, comprising a syngas unit and a supply of process gas to said syngas unit, wherein an electrical heater (100) according to any one of claims 1-8 is arranged to heat the process gas prior to it being fed to the syngas unit.

## Patentansprüche

1. Elektrische Heizung (100), wobei dir elektrische Heizung (100) einen Keramikmonolithen (10) und einen auf dem Keramikmonolithen (10) gelagerten Metallwiderstandsdraht (20) umfasst, wobei zumindest ein Abschnitt des Metallwiderstandsdrahts (20) und wahlweise zumindest ein Abschnitt des Keramikmonolithen (10) mit einer Keramikbeschichtung (30) überzogen ist und wobei zumindest ein Abschnitt der Keramikbeschichtung (30) mit einem Katalysatormetall imprägniert ist, das aus der Gruppe, bestehend aus Cu, Mn, Cr, Ni, Pt, Ir, Pd, Rh, Ru und Kombinationen davon, ausgewählt ist,
wobei der Keramikmonolith (10) ein erstes (11) und ein entgegengesetztes zweites (12) Ende aufweist, wobei sich eine Vielzahl von offenen Durchgängen (13) vom ersten Ende (11) des Monolithen zu dessen zweitem Ende (12) erstrecken, sodass ein Gasstrom durch den Monolithen vom ersten zum zweiten Ende des Monolithen erfolgen kann,
wobei sich der Widerstandsdraht (20) innerhalb mehrerer Durchgänge (13) des Keramikmonolithen (10) erstreckt,
wobei sich zumindest ein erster Abschnitt des Widerstandsdrahtes vom ersten Ende zum zweiten Ende des Monolithen innerhalb eines ersten Durchgangs des Monolithen (10) erstreckt und wobei sich zumindest ein zweiter Abschnitt des Widerstandsdrahtes (20) vom ersten Ende zum zweiten Ende des Monolithen innerhalb eines zweiten Durchgangs des Monolithen erstreckt.

2. Elektrische Heizung (100) nach Anspruch 1, wobei der Metallwiderstandsdraht (20) ein oder mehrere Metalle, ausgewählt aus der Gruppe, bestehend aus Eisen, Chrom, Nickel oder Aluminium, bevorzugt ein oder mehrere Metalle, ausgewählt aus Eisen und Aluminium, umfasst.

3. Elektrische Heizung (100) nach einem der vorstehenden Ansprüche, wobei der metallische Widerstandsdraht (20) eine Aluminium- (Al-) Legierung, wie beispielsweise eine Eisen-Chrom-Aluminium- (FeCrAl-) Legierung, umfasst oder daraus besteht.

4. Elektrische Heizung (100) nach einem der vorstehenden Ansprüche, wobei die Keramikbeschichtung (10) eine Keramik umfasst oder aus ihr besteht, ausgewählt aus der Gruppe, bestehend aus Aluminiumoxid Al₂O₃, einem Aluminat XAl₂O₄, wobei X Mg, Ca, Ba oder Mischungen davon ist, Siliciumdioxid, Aluminiumsilicat-Zeolith, Zirkonoxid-Aluminiumoxid und Kombinationen davon.

5. Elektrische Heizung (100) nach einem der vorstehenden Ansprüche, weiter umfassend einen ersten und einen zweiten elektrischen Anschluss, wobei sich der Widerstandsdraht (20) zwischen dem ersten und dem zweiten elektrischen Anschluss erstreckt, wobei der Widerstandsdraht (20) so angeordnet ist, dass er einen zwischen dem ersten und dem zweiten elektrischen Anschluss angelegten elektrischen Strom aufnimmt und ihn in Wärme umwandelt.

6. Elektrische Heizung (100) nach einem der vorstehenden Ansprüche, wobei der keramische Monolith eine im Wesentlichen zylindrische Form aufweist.

7. Elektrische Heizung (100) nach Anspruch 1, wobei sich der Widerstandsdraht (20) vom ersten elektrischen Anschluss entlang abwechselnder Passagen des Keramikmonolithen zum zweiten elektrischen Anschluss erstreckt.

8. Elektrische Heizung (100) nach Anspruch 1, wobei der erste und der zweite elektrische Anschluss am selben Ende des Keramikmonolithen angeordnet sind.

9. Verfahren zum Herstellen der elektrischen Heizung (100) nach einem der vorstehenden Ansprüche, wobei das Verfahren die folgenden Schritte umfasst:
- Bereitstellen eines keramischen Monolithen (10),
wobei der Keramikmonolith (10) ein erstes (11) und ein entgegengesetztes zweites (12) Ende aufweist, wobei sich mehrere offene Durchgänge (13) vom ersten Ende (11) des Monolithen zu dessen zweitem Ende (12) erstrecken, sodass ein Gasstrom durch den Monolithen vom ersten zum zweiten Ende des Monolithen erfolgen kann,
- Lagern eines metallischen Widerstandsdrahts (20) auf dem Keramikmonolithen (10),
wobei sich der Widerstandsdraht (20) innerhalb mehrerer Durchgänge (13) des Keramikmonolithen (10) erstreckt,
wobei sich zumindest ein erster Abschnitt des Widerstandsdrahts innerhalb eines ersten Durchgangs des Monolithen (10) vom ersten Ende zum zweiten Ende des Monolithen erstreckt und wobei sich zumindest ein zweiter Abschnitt des Widerstandsdrahts (20) innerhalb eines zweiten Durchgangs des Monolithen vom ersten Ende zum zweiten Ende des Monolithen erstreckt,
- Beschichten zumindest eines Abschnitts des Widerstandsdrahtes (20) und wahlweise zumindest eines Abschnitts des Keramikmonolithen (10) mit einer Keramikbeschichtung (30),
- Imprägnieren zumindest eines Abschnitts der keramischen Beschichtung (30) mit mindestens einer wässrigen Lösung, die ein Salz eines katalytischen Metalls enthält, ausgewählt aus der Gruppe, bestehend aus Cu, Mn, Cr, Ni, Pt, Ir, Pd, Rh, Ru und Kombinationen davon,
- Aufheizen des elektrischen Heizelements unter reduzierenden Bedingungen, um so das katalytische Metall zu aktivieren.

10. Verfahren zum gleichzeitigen Aufheizen eines Prozessgases und Entfernen eines Verunreinigungsgases aus dem Prozessgas, wobei das Verfahren die folgenden Schritte umfasst:
- Zuführen von Prozessgas, welches das genannte Verunreinigungsgas enthält, zu einer elektrischen Heizung (100) nach einem der Ansprüche 1 bis 8,
- Zuführen von elektrischer Energie zum Widerstandsdraht (20), dadurch Aufheizen des Widerstandsdrahts,
- selektives Umwandeln des Verunreinigungsgases im Prozessgas zu einem Inertgas in einem durch das Katalysatormetall geförderten katalytischen Prozess, während gleichzeitig das Prozessgas aufgeheizt wird.

11. Festoxid-Elektrolyseursystem, umfassend eine Elektrolyseureinheit, bevorzugt eine Festoxid-Elektrolyseurzelle (SOEC, 200) und eine Zufuhr von Prozessgas (A) zu der Elektrolyseureinheit, wobei eine elektrische Heizung (100) nach einem der Ansprüche 1 bis 8 so angeordnet ist, dass sie das Prozessgas aufgeheizt, bevor es der Elektrolyseureinheit zugeführt wird.

12. Brennstoffzellensystem, umfassend eine Brennstoffzelle und eine Zufuhr von Prozessgas zu der Brennstoffzelle, wobei eine elektrische Heizung (100) nach einem der Ansprüche 1 bis 8 so angeordnet ist, dass sie das Prozessgas aufgeheizt, bevor es der Brennstoffzelle zugeführt wird.

13. Synthesegassystem, umfassend eine Synthesegaseinheit und eine Zufuhr von Prozessgas zu der Synthesegaseinheit, wobei eine elektrische Heizung (100) nach einem der Ansprüche 1 bis 8 so angeordnet ist, dass sie das Prozessgas aufgeheizt, bevor es der Synthesegaseinheit zugeführt wird.

## Revendications

1. Radiateur électrique (100), ledit radiateur électrique (100) comprenant un monolithe céramique (10) et un fil de résistance métallique (20) supporté sur ledit monolithe céramique (10), dans lequel au moins une partie dudit fil de résistance métallique (20), et éventuellement au moins une partie dudit monolithe céramique (10), est revêtue d'un revêtement céramique (30), et dans lequel au moins une partie dudit revêtement céramique (30) est imprégnée d'un métal catalytique choisi parmi le groupe consistant en Cu, Mn, Cr, Ni, Pt, Ir, Pd, Rh, Ru et leurs combinaisons,
dans lequel le monolithe céramique (10) présente des première (11) et seconde (12) extrémités opposées, dans lequel une pluralité de passages ouverts (13) s'étendent depuis la première extrémité (11) du monolithe à la seconde extrémité (12) de celui-ci, de sorte que le flux de gaz puisse prendre place à travers le monolithe depuis la première extrémité à la seconde extrémité du monolithe,
dans lequel le fil de résistance (20) s'étend dans de multiples passages (13) du monolithe céramique (10),
dans lequel au moins une première partie du fil de résistance s'étend depuis la première extrémité à la seconde extrémité du monolithe dans un premier passage du monolithe (10), et dans lequel au moins une seconde partie du fil de résistance (20) s'étend depuis la première extrémité à la seconde extrémité du monolithe dans un second passage du monolithe.

2. Radiateur électrique (100) selon la revendication 1, dans lequel ledit fil de résistance métallique (20) comprend un ou plusieurs métaux choisis parmi le groupe consistant en le fer, le chrome, le nickel ou l'aluminium, de préférence un ou plusieurs métaux choisis parmi le fer et l'aluminium.

3. Radiateur électrique (100) selon l'une quelconque des revendications précédentes, dans lequel le fil de résistance métallique (20) comprend ou consiste en un alliage d'aluminium (Al), tel qu'un alliage de fer-chrome-aluminium (FeCrAl).

4. Radiateur électrique (100) selon l'une quelconque des revendications précédentes, dans lequel le revêtement céramique (10) comprend ou consiste en une céramique choisie dans le groupe consistant en l'alumine Al₂O₃, un aluminate XAl₂O₄ dans lequel X est Mg, Ca, Ba ou des mélanges de ceux-ci, la silice, la zéolite alumino-silicate, le zircone-alumine et des combinaisons de ceux-ci.

5. Radiateur électrique (100) selon l'une quelconque des revendications précédentes, comprenant en outre des première et seconde bornes électriques, dans lequel le fil de résistance (20) s'étend entre les première et seconde bornes électriques, le fil de résistance (20) étant disposé pour recevoir un courant électrique appliqué entre la première et la seconde borne électrique et le convertir en chaleur.

6. Radiateur électrique (100) selon l'une quelconque des revendications précédentes, dans lequel le monolithe céramique présente une forme sensiblement cylindrique.

7. Radiateur électrique (100) selon la revendication 1, dans lequel le fil de résistance (20) s'étend depuis la première borne électrique, le long de passages alternés du monolithe céramique jusqu'à la seconde borne électrique.

8. Radiateur électrique (100) selon la revendication 1, dans lequel les première et seconde bornes électriques sont disposées à la même extrémité du monolithe céramique.

9. Processus de fabrication du radiateur électrique (100) selon l'une quelconque des revendications précédentes, ledit processus comprenant les étapes suivantes
- la fourniture d'un monolithe céramique (10),
dans lequel le monolithe céramique (10) présente des première (11) et seconde (12) extrémités opposées, dans lequel une pluralité de passages ouverts (13) s'étendent depuis la première extrémité (11) du monolithe à la seconde extrémité (12) de celui-ci, de sorte que le flux de gaz puisse prendre place à travers le monolithe depuis la première extrémité à la seconde extrémité du monolithe,
- le support d'un fil de résistance métallique (20) sur le monolithe céramique (10),
dans lequel le fil de résistance (20) s'étend dans de multiples passages (13) du monolithe céramique (10),
dans lequel au moins une première partie du fil de résistance s'étend depuis la première extrémité à la seconde extrémité du monolithe dans un premier passage du monolithe (10), et dans lequel au moins une seconde partie du fil de résistance (20) s'étend depuis la première extrémité à la seconde extrémité du monolithe dans un second passage du monolithe,
- le revêtement d'au moins une partie dudit fil de résistance (20), et éventuellement d'au moins une partie dudit monolithe céramique (10), avec un revêtement céramique (30),
- l'imprégnation d'au moins une partie du revêtement céramique (30) avec au moins une solution aqueuse contenant un sel d'un métal catalytique choisi parmi le groupe consistant en Cu, Mn, Cr, Ni, Pt, Ir, Pd, Rh, Ru et leurs combinaisons,
- le chauffage du radiateur électrique dans des conditions réductrices afin d'activer le métal catalytique.

10. Processus permettant de chauffer simultanément un gaz de processus et d'éliminer un gaz contaminant dudit gaz de processus, ledit processus comprenant les étapes suivantes
- la fourniture d'un gaz de processus comprenant ledit gaz contaminant à un radiateur électrique (100) selon l'une quelconque des revendications 1-8,
- la fourniture d'énergie électrique au fil de résistance (20), chauffant ainsi ledit fil de résistance,
- la conversion sélective du gaz contaminant dans le gaz de processus en un gaz inerte dans un processus catalytique favorisé par le métal catalytique, tout en chauffant simultanément le gaz de processus.

11. Système d'électrolyseur à oxyde solide, comprenant une unité d'électrolyseur, de préférence une cellule d'électrolyseur à oxyde solide (SOEC, 200), et une alimentation en gaz de processus (A) de ladite unité d'électrolyseur, dans lequel un radiateur électrique (100) selon l'une quelconque des revendications 1-8 est disposé pour chauffer le gaz de processus avant qu'il ne soit introduit dans l'unité d'électrolyseur.

12. Système de pile à combustible, comprenant une pile à combustible et une alimentation en gaz de processus de ladite pile à combustible, dans lequel un radiateur électrique (100) selon l'une quelconque des revendications 1-8 est disposé pour chauffer le gaz de processus avant qu'il ne soit fourni à la pile à combustible.

13. Système de gaz de synthèse, comprenant une unité de gaz de synthèse et une alimentation en gaz de processus de ladite unité de gaz de synthèse, dans lequel un radiateur électrique (100) selon l'une quelconque des revendications 1-8 est disposé pour chauffer le gaz de processus avant qu'il ne soit fourni à l'unité de gaz de synthèse.
